Europäisches Patentamt

(19) European Patent Office

Office européen des brevets

(11) EP 0 882 690 A1

(12) EUROPEAN PATENT APPLICATION

(43) Date of publication:
09.12.1998 Bulletin 1998/50

(51) Int. Cl.$^6$: C04B 41/86, H01B 17/02

(21) Application number: 97303691.6

(22) Date of filing: 02.06.1997

(84) Designated Contracting States:
AT BE CH DE DK ES FI FR GB GR IE IT LI LU MC NL PT SE

(71) Applicant: NGK INSULATORS, LTD.
Nagoya City Aichi Pref. (JP)

(72) Inventors:
• Ishida, Yoshihiko
Nagoya City, Aichi Pref., 458 (JP)
• Ikami, Toshiichi
Kounan-city, Aichi Pref., 483 (JP)

• Matsuda, Kazuyuki
Nagoya City, Aichi Pref., 468 (JP)
• Iimi, Takao
Chita-gun, Aichi-Pref., 470-24 (JP)

(74) Representative:
Paget, Hugh Charles Edward et al
MEWBURN ELLIS
York House
23 Kingsway
London WC2B 6HP (GB)

(54) Ceramic articles with conductive glaze

(57) An article, particularly a suspension insualtor has a ceramic body and an electrically conductive glaze layer. The glaze layer has an electrically insulating matrix and electrically conductive particles dispersed in the matrix. The electrically conductive particles each contain at least 50% by weight of Mo-containing material selected from Mo in metallic state and compounds of Mo such as silicides. Desired electrical properties of the glaze can be obtained, and the glaze is easy to manufacture.

EP 0 882 690 A1

**Description**

FIELD OF THE INVENTION

This invention relates to an article comprising a ceramic body having an electrically conductive glaze layer on its surface, and is applicable particularly to ceramic electrical insulators for use in electrical power transmission systems, electrical power distribution systems and electrical power sub-stations. The insulator has a fired ceramic body and at the surface of the body the electrically conductive glaze layer co-fired with the ceramic body. The invention is applicable for example to suspension insulators.

DESCRIPTION OF THE PRIOR ART

It is known to apply a conductive glaze to a ceramic electrical insulator, particularly a suspension insulator. The conventional function of a glaze is to increase strength. When the glaze is conductive, a small current, e.g. 2mA, passes between the terminals of the insulator when a voltage is applied across the insulator. This electrical current heats the surface of the insulator slightly, helping to melt snow on the insulator and to dry the insulator surface, thereby maintaining the overall high resistance and low leak current of the insulator. This permits the insulator to operate at a higher voltage level. Typically the total resistance of the glaze between the insulator electrodes is in the range 2 to 10 M$\Omega$

Dust particles, if wet, are conductive on the surface of the insulator, and arcing may occur between dust particles. This is avoided if the glaze is conductive, since a continuous current path between the dust particles exists. The passage of current also dries the dust.

It is known to make a conductive glaze by adding conductive particles into an insulating glaze matrix. GB-A-678718 describes the use of the so-called blue titanium dioxide (which is oxygen-deficient) to provide conductivity in a glaze on an electrically insulating ceramic part. Blue $TiO_2$ is obtained by firing at low oxygen pressure. In addition to the conductive $TiO_2$, other oxides such as oxides of Be, Cr, Cu, Co, Ni, Mn, Mo, W and V may be included to inhibit or promote the tendency of $TiO_2$ to assume its conducting form. The $TiO_2$ may be distributed in a diluent of clay, silica, feldspar and soapstone. A surface glaze is applied over the $TiO_2$-containing layer. GB-A-848034 describes the addition of molybdenum disilicide, in an amount of 0.1 to 20% by weight relative to the titanium dioxide content, in the glaze of GB-A-678178. The use of molybdenum disilicide reduces or avoids the need for accurate control of the firing conditions. Molybdenum disilicide is said to be much more effective than molybdenum oxide for this purpose. This avoids the need for a protective glaze, applied over the conductive glaze containing the blue titanium dioxide, but nevertheless a glaze coating is recommended.

A $TiO_2$-containing glaze in which $TiO_2$ is in the conductive form $TiO_{2-x}$ has the defect that a minute discharge on the surface of the glaze may cause conversion to $TiO_2$ which is insulating. Secondly, the resistance of the glaze may have a large variation (reduction) on heating, so that thermal stability is poor.

It has also been proposed in "Ceramics" (Bulletin of the Ceramics Society of Japan) Vol. 11, No. 10, 905-910 (1976) to use an $Fe_2O_3$-containing glaze. This conductive glaze has the composition for example 30 - 70 wt% of $Fe_2O_3+TiO_2+Cr_2O_3$, and 30 - 70 wt% of base glazing components. The conductive glaze contains metal oxides comprising $Fe_2O_3$ as a main component and $TiO_2$, $Cr_2O_3$, $V_2O_5$, $MnO_2$, BeO, ZnO or the like. This kind of conductive glaze has the problems of a risk of loss of thermal control and deterioration of electrical corrosion resistance by an electrochemical elution of the conductive oxide.

Generally, the resistance variation with temperature of a conductive glaze is of negative type, which means decrease of surface resistivity when temperature rises. The correlation between temperature and surface resistivity can be expressed by the following formula which is similar to that used for thermistors:-

$$R=R_0 \, \exp(B(1/T - 1/T_0))$$

where R is surface resistivity ($\Omega$) at temperature T(K), $R_0$ is surface resistivity ($\Omega$) at temperature $T_0$(K), and B is a thermistor constant (K). The temperature dependence of the resistance can be expressed by the value of B in this formula. When the value of B is high, the resistance is more reduced by temperature rise and the risk of loss of thermal control is increased.

An iron oxide type of conductive glaze has a high value of B of about 3000-4000K. A temperature increase of about 15-20°C is sufficient for reducing the initial resistance by half. Because of this, the resistance is lowered by heat generated by passage of current at the surface of the insulator, thereby increasing leakage of electricity, which further generates heat. Finally, the temperature of the insulator sharply rises, and the insulator may be thermally broken. Accordingly, this glaze cannot be used as a conductive glaze for the whole surface and has been used as a conductive glaze partially applied to the region of an electrode in the top portion, or the like, of a pin insulator for a purpose of avoiding corona noise.

NGK Insulators, Ltd. have sold high-voltage suspension insulators having a tin oxide type conductive glaze with a composition of 20-40 wt% of $SnO_2+Sb_2O_5$ and 60-80 wt% of base glazing components. Tin oxide and antimony trioxide are mixed in a predetermined ratio and the mixture is added to a glazing component. $SnO_2$ in which $Sb^{5+}$ is doped has conductivity. This conductive glaze also has a temperature-dependent variation of resistance with a B-value in the above formula of 1000-1500 K. Since this conductive glaze has less risk of loss of thermal control in comparison with the conductive glaze discussed above, it can be applied to the whole surface. However, when these insulators are put into use it is necessary to maintain a low voltage per one insulator and control calorific output on the surface of the insulator. That is to say, a large number of the insulators has to be connected with one another in use.

Though electrical corrosion, which is a main cause of electrochemical elution in an iron oxide type conductive glaze, seldom happens in tin oxide type conductive glaze, when the insulator is subjected to a field test for a long period of time, the surface of the insulator becomes rough, thereby creating risk of chipping. Accordingly, surface resistivity gradually rises and the desired effect of the conductive glaze disappears The cause of this seems to be a physical and chemical reaction caused by the separation of current between the surface of the conductive glaze and an impurity. Since deterioration of resistance is remarkable particularly in direct current operation, this conductive glaze has not been used as a conductive glaze for a whole surface for direct current operation.

Further, a tin oxide type conductive glaze needs to be fired in an oxidation atmosphere, and a predetermined surface resistivity which is required for an insulator cannot be obtained when it is fired in a reducing atmosphere.

SUMMARY OF THE INVENTION

It is an object of the invention to overcome or mitigate the disadvantages described above.

According to the present invention there is provided an article comprising at least one ceramic body having on at least part of its surface an electrically conductive glaze layer, said glaze layer having an electrically insulating matrix and electrically conductive particles dispersed in the matrix, at least 50% by weight of said electrically conductive particles consisting of particles which each contain at least 50% by weight of Mo-containing material selected from Mo in metallic state and compounds of Mo.

The Mo-containing material may be Mo in metallic state alone or there may be particles of Mo in metallic state and particles containing Mo compound or compounds such as Mo-silicide. $MoSi_2$ when added may convert into other conductive silicides and/or $MoO_2$ during firing.

Preferably the particles in the glaze containing Mo-containing material each contain at least 90% by weight of said Mo-containing material, and more preferably consists substantially entirely of the Mo-containing material.

Preferably at least 90% by weight of said electrically conductive particles in said glaze layer consist of said particles containing Mo-containing material and more preferably substantially all of said electrically conductive particles in said glaze layer consist of said particles containing Mo-containing material.

The amount of the electrically conductive Mo-containing particles is chosen according to the properties desired, and may be in the range 1-90% by weight of the glaze.

The mean particle size of the Mo-containing electrically conductive particle is preferably in the range 1 - 50 $\mu$m, more preferably 1 - 15 $\mu$m.

The electrically insulating matrix may be one used conventionally for insulator glazes, e.g. a glass such as a soda glass. One preferred glass has the following components, expressed in molar ratios in accordance with the Seger formula:

| | |
|---|---|
| $K_2O + Na_2O$ | 10-70 mol, |
| CaO | 0-70 mol, |
| MgO | 0-90 mol, |
| | provided that the total ($K_2O + Na_2O + CaO + MgO$) is 100 mol, |
| $Al_2O_3$ | 30-120 mol, and |
| $SiO_2$ | 400-800 mol. |

The matrix may contain Fe in the form of at least one Fe-compound. $Fe_2O_3$ can impart a brown color.

The temperature dependence coefficient (B-value) of resistance of the glaze used in the invention may be as small as 0-200 K. Accordingly, it is not necessary to consider the problem of loss of thermal control in use, and a suitable whole surface conductive glaze for an electrical insulator can be provided. Because the voltage which can be safely applied to one insulator with a conductive glaze on the whole surface thereof can be increased, the number of connected insulators needed to meet a given voltage level can be reduced.

Electrical deterioration has not been found in insulators with a conductive glaze of the present invention when used in either alternating current or direct current operation, and surface resistivity does not change. Accordingly, consideration of life span due to electric corrosion is not necessary, unlike the case with an insulator using a conventional glaze as a whole surface glaze.

With the conductive glaze of the present invention, a predetermined surface resistivity required of an insulator with a conductive glaze can be obtained using a wide range of oxidizing atmospheres and reducing atmospheres in firing.

The present invention can provide a conductive glaze having a selected coefficient of thermal expansion (CTE). Typically an insulator body has a thermal expansion coefficient of 8.0-4.5 x $10^{-6}K^{-1}$. A conductive glaze used in the invention can have a sufficiently smaller CTE than the body that it gives sufficient compression to the surface of the insulator, thereby increasing mechanical strength of the insulator. In particular the CTE of the glaze used in the invention is preferably less than the CTE of the insulator body by at least 2.0 x $10^{-6}K^{-1}$. The known tin oxide type conductive glaze described above has a CTE of 4.5-5.5 x $10^{-6}K^{-1}$, so that sufficient compression cannot always be given to the insulator, and in practice a conventional glaze having a low CTE has been applied to a portion which needs high strength. However, a glaze of the present invention can be applied to the whole surface of the insulator and impart sufficient strength to the insulator.

By means of additives, a glaze of the invention can have a choice of color. The known tin oxide type of conductive glaze which has been used can have only a grey color which is the coloring of the tin oxide. In some countries, a brown insulator is demanded. The conductive glaze of the present invention can have a brown color.

A total amount of conductive particles in the glaze can be reduced by using both Mo and a Mo compound, which achieves the predetermined effect. This reduces cost.

The electrically conductive material whose particles are included in the glaze must have a suitable low resistivity, preferably less than 1000 $\Omega$cm, preferably not more than 100 $\Omega$cm, and must be capable of being fired under the conditions of firing of the insulator, for example at a firing temperature of 1200 to 1300°C. The particles must remain distributed through the glass matrix of the glaze. The material must be in electrically conductive form in the glaze.

Advantages which can be obtained within the invention are that particles of material having a desired temperature coefficient of resistivity can be employed in the glaze. The glaze may have a positive temperature coefficient of resistivity, or a slightly negative one, and this coefficient (constant B in the thermistor formula above) may lie between -300 to 300 K. The use of the particles of conductive material enables control of the resistivity of the glaze, by the choice of material and also by the amount of the particles included in the glaze. The composition of the matrix of the glaze can also be varied to adjust the resistivity. Surface resistivity of between $10^{-1}$ to $10^{9}$ $\Omega$cm can for example be obtained for the glaze in the invention.

Oxidation of the particles during firing can be minimized, by choice of the material of the particles and their amount, and the insulators of the invention can be fired at a wide range of oxygen partial pressures, e.g. from 0.1 to $10^{-10}$ atm, which allows optimisation of the firing conditions for the ceramic body of the insulator. Some glazes used in the invention may be fired under reducing conditions. The ability to employ a low oxygen concentration during firing improves the quality of the insulator, and reduces costs.

In addition to the electrically conductive particles, electrically non-conductive particles may also be distributed in the glaze matrix, in order to determine the color of the glaze or the thermal expansion coefficient of the glaze. For example pigment particles may be included, and also non-conductive particles made of a material having a low coefficient thermal expansion, such as cordierite.

The technology of production of ceramic insulators is well known and need not be described here, but it is mentioned that the glaze can be applied, e.g. to an insulator body, by conventional processes such as flow coating and dipping, and that firing may be in oxidizing conditions (oxygen partial pressure $0.2-10^{-3}$ atm) or reducing conditions (oxygen partial pressure $10^{-3}-10^{-10}$ atm), depending on the composition.

Firing conditions, e.g. firing temperature and firing schedule also may affect the resistivity of the glaze. Some electrically conductive materials whose particles may be included in the glaze are sensitive to firing conditions, and care may be needed. For example $MoO_3$ may be lost from the glaze at 800°C, so that a heating curve should be selected which minimizes this loss.

The invention is described primarily as applied to electrical insulators. Other articles to which it may be applied are an electrically heatable tile, used for example to achieve melting of snow, and an electrically conductive paving material e.g. for roads. The paving material may comprise ceramic particles having the glaze as a surface coating, the glaze bonding the particles together while leaving pores for water flow.

EXAMPLES

Examples of the invention are given below, and are intended to illustrate the invention but not to limit it.

Tables 1(a) and 1(b) below give examples of electrical insulators of the invention identified as "Mo type conductive glaze", and comparative examples identified as "tin oxide type conductive glaze".

To prepare the components of the matrix of the glaze, the oxide components are mixed in the desired ratio and subjected to wet grinding. Non-conductive filler particles may be included. The desired conductive particles (Mo, $MoSi_2$) are then added to the mixture, which is then agitated. Preferably the particle size distribution of the conductive particles is not altered by the agitation. The glaze is applied in a conventional manner to a ceramic insulator body. The mean particle size of the $SnO_2$ and $Sb_2O_5$ fillers was in the range 0.5 - 3 $\mu$m. The mean particle sizes of the $MoSi_2$ filler and Mo filler were 8 $\mu$m and 3 $\mu$m respectively.

The terms "oxidizing flame firing" and "reducing flame firing" refer to the firing atmosphere at the high temperature phase over 1000°C. The maximum firing temperature was 1270°C. An oxygen partial pressure of higher than $10^{-3}$ atm (0.1 MPa) is regarded as oxidizing, while an oxygen partial pressure lower than $10^{-3}$ atm is regarded as reducing.

Table 1b shows ranges of surface resistivity, which may be obtained by varying firing conditions.

EP 0 882 690 A1

Table 1(a)

| Type of conductive glaze | | Tin oxide type conductive glaze | Mo type conductive glaze | | | | | | | | | |
|---|---|---|---|---|---|---|---|---|---|---|---|---|
| Nature of base glazing component | | White glaze | White glaze | | | | Brown glaze | | | Low expansion glaze | | |
| Base glazing components (molar ratio according to Seger formula) | KNaO | 0.3 | | | | | 0.4 | | | 0.2 | | |
| | CaO | 0.5 | | | | | 0.45 | | | 0.05 | | |
| | MgO | 0.2 | | | | | 0.15 | | | 0.75 | | |
| | $Al_2O_3$ | 0.5 | | | | | 0.70 | | | 0.90 | | |
| | $SiO_2$ | 5.0 | | | | | 6.50 | | | 5.50 | | |
| Amount of pigment and flux | | ---------------------------- | | | | | 5.0 wt% ($Fe_2O_3$, $MnO_2$, etc.) | | | 2.0 wt% ($MnO_2$, etc.) | | |
| Amount of conductive filler (vol%) | $SnO_2$, $Sb_2O_5$ | 14* | -- | -- | -- | -- | -- | -- | -- | -- | -- | -- |
| | $MoSi_2$ | -- | 9 | 7 | 5 | -- | 16 | 13 | 5 | 9 | 7 | 5 |
| | Mo | -- | -- | -- | -- | 3 | -- | -- | 2 | 2 | 2 | 2 |
| Amount of water | | 60 weight parts of water per 100 weight parts of total solids | | | | | | | | | | |
| Firing conditions | temperature | 1270°C | | | | | | | | | | |
| | time | 2 hours | | | | | | | | | | |
| | atmosphere | Oxidising flame firing | Reducing flame firing | | | | | | | | | |
| Surface resistivity | $\Omega$ cm | $10^8$ | $10^2$ | $10^5$ | $10^8$ | $10^4$ | $10^5$ | $10^7$ | $10^7$ | $10^3$ | $10^4$ | $10^7$ |
| Thermal expansion coefficient of glaze | $K^{-1}$ X $10^{-6}$ | 5.0 | 4.9 | 4.8 | 4.6 | 4.9 | 5.4 | 5.2 | 5.1 | 3.9 | 3.7 | 3.1 |
| Appearance (color) after firing | | Light grey | Black | | | | Dark Brown | | | Black | | |

*Weight ratio $SnO_2$ : $Sb_2O_5$ = 29 : 1

Table 1 (b)

| Type of conductive glaze | | Tin oxide conductive glaze | | Mo type conductive glaze | |
|---|---|---|---|---|---|
| Base glazing component | KNaO | 0.3 | | | |
| | CaO | 0.5 | | | |
| Seger formula (molar ratio) | MgO | 0.2 | | | |
| | $Al_2O_3$ | 0.5 | | | |
| | $SiO_2$ | 5.0 | | | |
| Amount of conductive filler | | $SnO_2$ : 29 wt% $Sb_2O_5$ : 1.0 wt% (total $SnO_2$ + $Sb_2O_5$ is 14 vol%) | | $MoSi_2$ : 13 wt% | |
| Firing conditions | atmosphere | Oxidizing flame firing | Reducing flame firing | Oxidizing flame firing | Reducing flame firing |
| Surface resistivity | $\Omega cm$ | $10^7 - 10^9$ | $10^{10}$ or more | $10^7 - 10^9$ | $10^7 - 10^9$ |

In these Mo-containing glazes of the invention, we have found evidence of the presence of $MoSi_2$, $Mo_5Si_3$, $Mo_3Si$, $MoO_2$ and Mo, by X-ray diffraction analysis. It seems that $MoSi_2$ is converted to other compounds on firing. Mo when added in the metallic state remains in that state. All of these materials are electrically conductive.

**Claims**

1.  An article comprising at least one ceramic body having on at least part of its surface an electrically conductive glaze layer, said glaze layer having an electrically insulating matrix and electrically conductive particles dispersed in the matrix, at least 50% by weight of said electrically conductive particles consisting of particles which each contain at least 50% by weight of Mo-containing material selected from Mo in metallic state and compounds of Mo.

2.  An article according to claim 1 wherein said particles containing Mo-containing material each contain at least 90% by weight of said Mo-containing material.

3.  An article according to claim 2 wherein said particles containing Mo-containing material each consists substantially entirely of said Mo-containing material

4.  An article according to any one of claims 1 to 3 wherein at least 90% by weight of said electrically conductive particles in said glaze layer consist of said particles containing Mo-containing material.

5.  An article according to claim 4 wherein substantially all of said electrically conductive particles in said glaze layer consist of said particles containing Mo-containing material.

6.  An article according to any one of claims 1 to 5 wherein said electrically conductive particles containing Mo-containing material constitute 1 to 90% by weight of said glaze.

7.  An article according to any one of claims 1 to 6 wherein said particles containing Mo-containing material contain one or more Mo-silicides.

8.  An article according to any one of claims 1 to 6 wherein said particles containing Mo-containing material contain Mo in metallic state and at least one compound of Mo.

9.  An article according to claim 8 wherein said at least one compound of Mo is at least one Mo-silicide.

10. An article according to any one of claims 1 to 9 wherein said electrically insulating matrix is a glass.

11. An article according to claim 10 wherein said glass has the following components, in molar ratios:

$K_2O + Na_2O$   10-70 mol,
CaO           0-70 mol,
MgO           0-90 mol,
              provided that the total ($K_2O + Na_2O + CaO + MgO$) is 100 mol,
$Al_2O_3$       30-120 mol, and
$SiO_2$         400-800 mol.

12. An article according to any one of claims 1 to 11 wherein said matrix contains Fe in the form of at least one Fe-compound.

13. An article according to any one of claims 1 to 12 in the form of a ceramic electrical insulator.

14. An electrical insulator according to claim 13 wherein the thermal expansion coefficient of said electrically conductive glaze is less than that of said ceramic body.

15. An electrical insulator according to claim 14 wherein the thermal expansion coefficient of said electrically conductive glaze is less than that of said ceramic body by at least $2.0 \times 10^{-6} K^{-1}$.

16. An article according to any one of claims 13 to 15 wherein said glaze layer contains, in addition to said electrically conductive particles, electrically insulating particles dispersed in said matrix.

17. An electrical insulator according to claim 16 wherein said electrically insulating particles are made of cordierite.

**18.** An article according to any one of claims 1 to 12 comprising a plurality of said ceramic bodies in the form of ceramic particles having said electrically conductive glaze layer on their surface, the glaze layer bonding the particles to each other.

**European Patent Office**

**EUROPEAN SEARCH REPORT**

**Application Number**

EP 97 30 3691

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DANCA EDNA A: "A Novel Conducting Glaze" AMERICAN CERAMIC SOCIETY BULLETIN, vol. 55, no. 6, 1976, pages 569-571, XP002045057 | 1-7,10, 13 | C04B41/86 H01B17/02 |
| Y | | 9,11,12, 14-18 | |
| | * abstract; figure 1; table I * * page 569, line 1 - line 2 * --- | | |
| X | US 3 394 087 A (HUANG CORNELIUS Y D ET AL) 23 July 1968 | 1-6,8,10 | |
| A | | 9,13,16 | |
| | * claims 3,4; example 15; table III * --- | | |
| X | DE 25 45 474 A (MATSUSHITA ELECTRIC IND CO LTD) 22 April 1976 | 1-7,10 | |
| A | | 9,13 | |
| | * claims 1,2,4 * --- | | |
| Y | EP 0 279 980 A (NGK INSULATORS LTD) 31 August 1988 | 11,14,15 | |
| A | | 1,13 | |
| | * claims 1,3,4 * --- | | **TECHNICAL FIELDS SEARCHED (Int.Cl.6)** C04B H01C |
| Y | DE 25 17 743 A (JENAER GLASWERK SCHOTT & GEN) 4 November 1976 * claim 1 * * page 5, paragraph 2 - page 6, paragraph 2 * --- | 16,17 | |
| Y | CH 360 106 A (VEB VEREINIGTE PORZELLANWERKE KÖPPELSDORF) 30 March 1962 | 12 | |
| A | | 1,13 | |
| | * claims * * page 2, line 45 - line 55 * --- | | |
| | -/-- | | |

The present search report has been drawn up for all claims

| Place of search | Date of completion of the search | Examiner |
|---|---|---|
| THE HAGUE | 29 October 1997 | Rosenberger, J |

**European Patent Office**

**EUROPEAN SEARCH REPORT**

Application Number

EP 97 30 3691

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US 3 661 595 A (BUCK ROBERT W) 9 May 1972 | 9 | |
| A | * claims * | 1-8 | |
| Y | PATENT ABSTRACTS OF JAPAN vol. 013, no. 236 (C-602), 30 May 1989 & JP 01 045785 A (MITSUBISHI HEAVY IND LTD), 20 February 1989, | 18 | |
| A | * abstract * & DATABASE WPI Section Ch, Week 8913 Derwent Publications Ltd., London, GB; Class L02, AN 89-097325 * abstract * | 14,15 | |

TECHNICAL FIELDS
SEARCHED       (Int.Cl.6)

The present search report has been drawn up for all claims

| Place of search | Date of completion of the search | Examiner |
|---|---|---|
| THE HAGUE | 29 October 1997 | Rosenberger, J |

EPO FORM 1503 03.82 (P04C01)